Europäisches Patentamt

European Patent Office

Office européen des brevets

(11) Veröffentlichungsnummer: **0 250 927 B1**

(12) **EUROPÄISCHE PATENTSCHRIFT**

(45) Veröffentlichungstag der Patentschrift: **03.06.92**

(21) Anmeldenummer: **87108155.0**

(22) Anmeldetag: **05.06.87**

(51) Int. Cl.⁵: **B61H 15/00**, F16D 65/56

(54) **Bremsbetätigungseinheit mit Zylinder und Gestängesteller.**

(30) Priorität: **27.06.86 DE 3621639**

(43) Veröffentlichungstag der Anmeldung:
**07.01.88 Patentblatt  88/01**

(45) Bekanntmachung des Hinweises auf die
Patenterteilung:
**03.06.92 Patentblatt  92/23**

(84) Benannte Vertragsstaaten:
**AT CH DE ES FR GB IT LI SE**

(56) Entgegenhaltungen:
**DE-A- 2 201 082**
**DE-B- 2 830 361**
**FR-A- 2 500 897**
**GB-A- 1 269 917**

(73) Patentinhaber: **Bergische Stahl-Industrie**
**Papenbergerstrasse 38**
**W-5630 Remscheid(DE)**

(72) Erfinder: **Rocholl, Hans**
**Damaschkestrasse 17a**
**W-5630 Remscheid(DE)**
Erfinder: **Klein, Horst**
**Erlenstrasse 23**
**W-5630 Remscheid(DE)**

(74) Vertreter: **Jung, Hermann L., Dipl.-Chem.**
**Postfach 1728 Augusta-Allee 10**
**W-6380 Bad Homburg v.d.H.(DE)**

## Beschreibung

Die Erfindung betrifft eine Bremsbetätigungseinheit mit einem hydraulischen oder pneumatischen Zylinder, insbesondere für Schienenfahrzeuge, mit einem Gestängesteller zur Aufrechterhaltung eines Spiels zwischen den Bremsflächen, wobei auf dem die Kupplungsflächen der Kupplungspaare tragenden rohrförmigen Teil bzw. dessen Fortsatz ein Anschlag (Ringkörper) in axialer Richtung fest aber gegenüber dem rohrförmigen Teil leicht drehbar vorgesehen ist, welcher sich in etwa radialer Richtung in den Bereich eines Gegenlagers erstreckt, das die freie Bewegung des Anschlags in Betätigungsrichtung begrenzt und wobei das Gegenlager parallel zur Bremskraftrichtung fest angeordnet ist.

Eine derartige Vorrichtung ist beispielsweise aus der DE-B-28 30 361 bekannt, wobei jedoch komplizierte Massnahmen notwendig sind, um die Vorrichtung wieder in die Anfangsstellung bei neuen Bremsbelägen zu bringen, aus der heraus dann wieder nachgestellt werden kann, wenn der Verschleiss des Bremsbelags ein zu grosses Lüftspiel zu Folge hat. Ein weiterer Nachteil besteht darin, dass auch dann, wenn das tatsächliche Lüftspiel zwischen den aufeinander liegenden Reibflächen kleiner ist als das gewünschte Lüftspiel, eine Nachstellung erfolgt. Dies ist besonders nachteilig, wenn sich auf den Reibflächen ein Eisbelag gebildet hat, weil dann das Lüftspiel über das vertretbare Mass hinaus vergrössert wird.

Der vorliegenden Erfindung liegt nun die Aufgabe zugrunde, die Nachteile der bekannten Vorrichtungen zu vermeiden und vor allem eine Bremsbetätigung zu schaffen, welche ohne grossen Aufwand mit einfachen Mitteln wieder zurückgestellt werden kann.

Die Lösung der Aufgabe besteht darin, dass ein zweites rückwärtiges Gegenlager vorgesehen ist, das sich an der anderen Seite des Anschlags befindet und parallel zur Bremskrftrichtung fest angeordnet ist und dass bei Anlage des Kolbens an der Rückwand des Zylinders und bei Anlage des Anschlags an das rückwärtige Gegenlager beide Kupplungspaare geöffnet sind.

Vorteilhaft ist mindestens ein Gegenlager federnd ausgebildet.

Der Vorteil dieser erfindungsgemässen Vorrichtung liegt vor allem darin, dass ohne besondere Werkzeuge die Rückstellung des Gestängestellers nach dem Einbau neuer Bremsbeläge einfach dadurch erreicht werden kann, dass man mit einem Hebel die Bremsbacke bzw. das damit verbundene Druckelement der Betätigungseinheit nach rückwärts drückt.

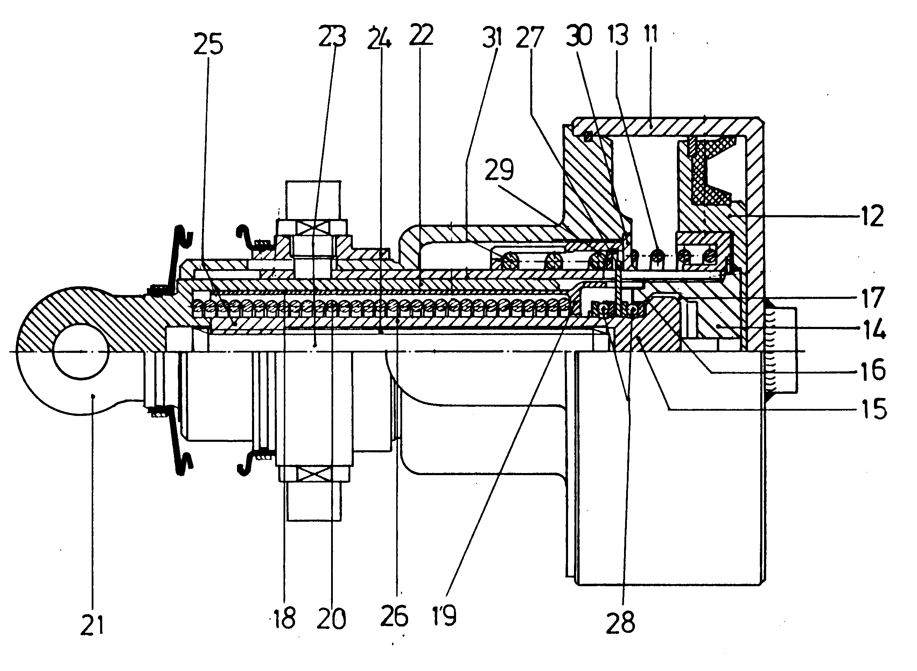

In der Zeichnung ist eine beispielsweise Ausführungsform der Erfindung dargestellt, in welcher sich das geschlossene System im Ruhezustand befindet. Dieses System besteht aus einem Betätigungszylinder 11 für hydraulische oder pneumatische Betätigung des Kolbens 12, welcher von der Rückdruckfeder 13 belastet ist. In einem Fortsatz 14 des Kolbens 12 liegt ein Flansch 15 so, dass sich zwei entgegengesetzt liegende Kupplungspaare 16 und 17 bilden, wobei der Abstand der Kupplungsflächen im Fortsatz 14 grösser ist als auf dem Flansch 15, wodurch bewirkt wird, dass immer nur ein Kupplungspaar gekuppelt ist. Der Fortsatz 14 des Kolbens 12 ist mit einer Führungshülse 18 verbunden, welche einen nach innen weisenden Kragen 19 als Widerlager für die Betätigungsfeder 20 trägt, welche sich mit ihrem anderen Ende an dem Abtriebskopf 21 abstützt, welcher in Richtung des Kolbens 12 mit einem rohrförmigen Teil 22 verlängert ist, in dem die Führungshülse 18 gelagert ist. Der Abtriebskopf 21 dient mit dem Auge als Verbindungsglied zum Bremsbelag oder den Bremshebeln o.ä. Auf der Rückseite des Abtriebskopfs 21 stützt sich die Spindel 23 ab, welche sich bis fast zum Flansch 15 erstreckt. Nahe dem Abtriebskopf 21 liegt auf dem nicht selbsthemmenden Gewinde 24 der Spindel 23 eine Mutter 25, welche über den rohrförmigen Teil 26 mit dem Flansch 15 eine Einheit bildet. Auf dem hinteren Teil des rohrförmigen Teils 26 ist ein Anschlag 27 zwischen zwei Kugellagern 28 leicht drehbar aber axial unverschieblich gelagert. Dieser Anschlag 27 erstreckt sich etwa radial nach aussen zwischen zwei Gegenlager 29 und 3o, wobei sich an dem Gegenlager 3o die Rückholfeder 13 des Zylinders 11 abstützt, wodurch das Gegenlager 3o in axialer Richtung federnd gelagert ist. Auch das andere Gegenlager 29 wird von einer Feder 31 federnd an seinem Platz gehalten.Beide Gegenlager 29 und 3o besitzen jeweils einen geringen Abstand vom Anschlag 27, wobei der Abstand zwischen Gegenlager 29 und Anschlag 27 das Mass für die Nachstellung gibt, wohingegen der axiale Abstand des Anschlags 27 vom Gegenlager 3o unkritisch ist.

Die Nachstellung des Lüftspiels zwischen Bremsbelag und Reibfläche bei am Auge des Abtriebskopfs 21 direkt oder indirekt angeordnetem Bremsbelag erfolgt in bekannter Weise so,dass bei Betätigung des Zylinders 11 dessen Kolben 12 mit dem Fortsatz 14 in Richtung auf den Kopf 21 verschoben wird. Die vorgespannte Feder 2o verschiebt dabei den Abtriebskopf 21 vom Zylinder 11 weg und nimmt über die Spindel 23 und die Mutter 25 den Anschlag 27 mit, wobei das Kupplungspaar 16 geschlossen bleibt. Hat sich nun am Kopf 21 infolge zu grossen Lüftspiels kein Gegendruck ergeben, wenn der Anschlag 27 am Gegenlager 29 zur Anlage kommt, so wird bei weiterer Betätigung des Zylinders 11 das Kupplungspaar 16 geöffnet, aber das Kupplungspaar 17 noch nicht geschlossen. Gleichzeitig drückt die Betätigungsfeder 2o den Abtriebskopf 21 mit der Spindel 23 vom Zylinder 11 weg, wodurch die Mutter 25 sich auf der Spindel 23 solange dreht und damit in Richtung auf den Zylinder 11 verschiebt, bis das Kupplungspaar 17 geschlossen ist. Dieser Vorgang geht solange, bis der Abtriebskopf 21 infolge Anlage der Bremsbeläge an der Bremsfläche sich nicht mehr verschieben kann. Es wird gebremst.

Wird nun wegen der Beendigung des Bremsvorganges der Druck aus dem Zylinder 11 genommen, so bewegt sich der Kolben 12 wieder in die in der Zeichnung dargestellte Ausgangsstellung wodurch das Kupplungspaar 17 geöffnet und das Kupplungspaar 16 wieder geschlossen wird und sich der Anschlag 27 wieder etwa in der Mitte zwischen den beiden Gegenlagern 29 und 3o befindet. Nun ist wieder das richtige Lüftspiel eingestellt.

Muss nun bei Ersatz der verschlissenen Bremsbeläge die Nachstellung in den Ursprungszustand (wie in der Zeichnung dargestellt) gebracht werden, so braucht man nur unter Überwindung der Kraft der Betätigungsfeder 2o mit einer Stange o.ä. Werkzeug den Abtriebskopf 21 soweit in Richtung auf den Zylinder 11 zurückzudrücken, bis das Kupplungspaar 16 geöffnet aber das Kupplungspaar 17 noch nicht geschlossen ist. Diese Stellung der Kupplungen 16 und 17 zueinander wird dann erreicht, wenn der Anschlag 27 am rückwärtigen Gegenlager 3o anliegt. Sobald dies der Fall ist, wird durch den Druck am Abtriebskopf 21 die Spindel 23 ebenfalls verschoben, was dazu führt, dass sich die Mutter 25 mit dem rohrförmigen Teil 26 und dem damit verbundenen Flansch 15 entgegengesetzt zur Nachstelldrehung verdreht, und zwar solange, bis sich der Abtriebskopf 21 an die Mutter 25 anlegt. Lässt man jetzt den Kopf 21 los, so wird durch die Betätigungsfeder 2o die Spindel 23 vom Zylinder 11 weggedrückt, bis das Kupplungspaar 17 geöffnet und das Kupplungspaar 16 geschlossen ist. Dann befindet sind der Anschlag 27 wieder etwa in der Mitte zwischen den beiden Gegenlagern 29 und 3o und die Betätigungseinheit ist wieder einsatzfähig.

Der Anschlag 27 ist etwa sternförmig ausgebildet, sodass Teile der Führungshülse 18 bis zum Kolben 12 bzw. dem Fortsatz 14 geführt und dort befestigt werden können.

Wenn es auch möglich ist, den Anschlag 27 in jeder bekannten Weise leicht drehbar auf dem rohrförmigen Teil 26 zu lagern, so hat es sich doch als Zweckmässig erwiesen, diesen Anschlag 27 zwischen zwei Kugellager 28 axial fest aber sehr leicht drehbar anzuordnen.

Im übrigen kann der Anschlag 27 jede gewünschte und geeignete Form besitzen, wie z.B. auch die Lager 28 selbst als Anschlag zu benutzen.

Durch die Anordnung der Hülse 18 an der Innenwand des rohrförmigen Teils 22 und gleichzeitiger Befestigung am Fortsatz 14 des Kolbens 12 funktioniert diese Hülse 18 als Führung für die relativ lange Betätigungsfeder 2o, sodass diese nicht ausknicken kann. Damit die Hülse 18 diese Funktion sicher erfüllen kann, muss sie an einem nicht nachstellenden Teil befestigt sein.

Es ist auch möglich, den Flansch 15 mit einem dem rohrförmigen Teil 26 entsprechenden und entgegengesetzt zu der Bremskraft gerichteten Ansatz zu versehen, auf dem der Anschlag 27 leicht drehbar angeordnet ist,und welcher sich in analoger Weise wie die Gegenlager 29 und 3o zwischen zwei Gegenlager erstreckt.

**Patentansprüche**

1.  Bremsbetätigungseinheit mit einem hydraulischen oder pneumatischen Zylinder, insbesondere für Schienenfahrzeuge, mit einem Gestängesteller zur Aufrechterhaltung eines Spiels zwischen den Bremsflächen, wobei auf dem die Kupplungsflächen der Kupplungspaare (16,17) tragenden rohrförmigen Teil (26) bzw. dessen Fortsatz (14) ein Anschlag (Ringkörper (27) in axialer Richtung fest aber gegenüber dem rohrförmigen Teil (26) leicht drehbar vorgesehen ist, welcher sich in etwa radialer Richtung in den Bereich eines Gegenlagers (Anschlagring (29) erstreckt, das die freie Bewegung des Anschlags (Ringkörper 27) in Betätigungsrichtung begrenzt, und wobei das Gegenlager parallel zur Bremskraftrichtung fest angeordnet ist, dadurch gekennzeichnet, dass ein zweites rückwärtiges Gegenlager (30) vorgesehen ist, das sich an der anderen Seite des Anschlags (27) befindet und parallel zur Bremskraftrichtung fest angeordnet ist und dass bei Anlage des Kolbens (12) an der Rückwand des Zylinders (11) und bei Anlage des Anschlags (27) an das rückwärtige Gegenlager (30) beide Kupplungspaare (16,17) geöffnet sind.

2.  Bremsbetätigungseinheit nach Anspruch 1, dadurch gekennzeichnet, dass der Anschlag (27) in Form eines Sterns ausgebildet ist.

3.  Bremsbetätigungseinheit nach Anspruch 1 oder 2, dadurch gekennzeichnet, dass mindestens ein Gegenlager (29) oder (30) in Betätigungsrichtung federn ausgebildet ist.

4.  Bremsbetätigungseinheit nach einem der Ansprüche 1 bis 3, dadurch gekennzeichnet, dass der rohrförmige (26) von einem weiteren äusseren Rohr (22) umgeben ist, welches mit dem rohrförmigen Teil (26) eine Einheit bildet und die BeBetätigungsfeder (20) zwischen den beiden Rohren (22) und (26) liegt.

**5.** Betätigungseinheit nach einem der Ansprüche 1 bis 4, dadurch gekennzeichnet, dass der Anschlag (27) zwischen zwei Kugellagern (28) liegt.

**6.** Betätigungseinheit nach einem der Ansprüche 1 bis 5, dadurch gekennzeichnet, dass zwischen der Betätigungsfeder (20) und dem äusseren rohrförmigen Teil (22) eine an diesem anliegende Hülse (18) vorgesehen ist, welche an einem nicht nachstellenden Teil, gegebenenfalls über Zwischenelemente, befestigt ist.

## Claims

**1.** Brake-actuation unit with a hydraulic or pneumatic cylinder, especially for rail vehicles, having a slack adjuster for maintaining a play between the braking surfaces, there being provided on the tubular part (26) carrying the coupling surfaces of the pairs of couplings (16, 17), or its extension (14), fixedly in the axial direction, but easily rotatably relative to the tubular part (26) a stop (annular body 27) which extends in an approximately radial direction into the region of an abutment (stop ring 29) limiting the free movement of the stop (annular body 27) in the actuating direction, and the abutment being arranged fixedly in parallel with the direction of the braking force, characterised in that there is provided a second rear abutment (30) which is located on the other side of the stop (27) and which is arranged fixedly in parallel with the direction of the braking force, and in that when the piston (12) bears against the rear wall of the cylinder (11) and when the stop (27) bears against the rear abutment (30) the two pairs of couplings (16, 17) are opened.

**2.** Brake-actuation unit according to Claim 1, characterised in that the stop (27) is designed in the shape of a star.

**3.** Brake-actuation unit according to Claim 1 or 2, characterised in that at least one abutment (29) or (30) is designed to be resilient in the actuating direction.

**4.** Brake-actuation unit according to one of Claims 1 to 3, characterised in that the tubular part (26) is surrounded by a further outer tube (22) which forms a unit with the tubular part (26), and the actuating spring (20) is located between the two tubes (22) and (26).

**5.** Actuation unit according to one of Claims 1 to 4, characterised in that the stop (27) is located between two ball bearings (28).

**6.** Actuation unit according to one of Claims 1 to 5, characterised in that between the actuating spring (20) and the outer tubular part (22) there is provided a sleeve (18) which bears against the latter and which is fastened to a non-adjusting part, if appropriate via intermediate elements.

## Revendications

**1.** Unité d'actionnement du frein avec un vérin hydraulique ou pneumatique, en particulier pour des véhicules sur rails avec un régleur de tringlerie pour le maintien d'un jeu entre les surfaces de frein, où, sur la pièce tubulaire (26) ou son prolongement (14) supportant les surfaces d'embrayage des paires d'embrayage (16,17) est prévue une butée (corps annulaire (27), fixe dans le sens axial, mais légèrenient tournante par rapport a la partie tubulaire (26), mais qui, dans le sens approximativement radial, s'étend jusqu'a la proximité d'une contre-butée (bague de butée (29), qui limite le mouvement libre de la butée (corps annulaire (27) dans le sens de l'actionnement, la contre-butée étant fixée parallèlement au sens de la force de freinage, caractérisée par le fait qu'une deuxième contre-butée (30) vers l'arrière est prévue de l'autre côté de la butée (27) disposée et fixée parallèlement au sens de la force de freinage et que, lors de l'application du piston (12) contre la paroi arrière du cylindre (11) et lors de l'application de la butée (27) contre la contre-butée arrière (30), les deux paires d'embrayage (16,17) sont ouvertes.

**2.** Unité d'actionnement du frein suivant la revendication 1, caractérisée par le fait que la butée (7) est réalisée en forme d'étoile.

**3.** Unité d'actionnement du frein, suivant la revendication 1 ou 2, caractérisée par le fait qu'au moins l'une des contre-butées (29 ou (30) est réalisée de façon élastique.

**4.** Unité d'actionnement du frein, suivant l'une des revendications 1 à 3, caractérisée par le fait que la partie tubulaire (26) est entourée d'un autre tube extérieur (22) qui, avec la partie tubulaire (26), forme une unité et que le ressort d'actionnement (20) se trouve entre les deux tubes (20) et (26).

**5.** Unité d'actionnement du frein, suivant l'une des revendications 1 à 4, caractérisée par le fait que la butée (27) se trouve entre deux roulements à billes (28).

**6.** Unité d'actionnement du frein, suivant l'une des revendications 1 à 5, caractérisée par le fait qu'entre le ressort d'actionnement (20) et la partie tubulaire extérieure (22) il est prévu une douille (18) qui l'entoure, et dont la fixation sur une pièce non réglable est assurée, le cas échéant, par des pièces intermédiaires.

EP 0 250 927 B1